# EUROPEAN PATENT SPECIFICATION

(11) **EP 1 416 654 B1**
(45) Date of publication and mention of the grant of the patent: **13.12.2006**
(21) Application number: 03024440.4
(22) Date of filing: 23.10.2003
(51) Int. Cl.: H04B 10/18, H04B 10/155

(54) **Duobinary optical transmission**
Optische duobinäre Übertragung
Transmission duobinaire optique

(30) Priority: 31.10.2002 KR 2002066859
(43) Date of publication of application: 06.05.2004
(73) Proprietor: SAMSUNG ELECTRONICS CO., LTD., Suwon-City, Kyungki-do (KR)
(72) Inventor: Kim, Sung-Kee, Paldal-gu Suwon-city Kyungki-do (KR); Hwang, Seong-Taek, Paldal-gu Suwon-city Kyungki-do (KR); Jeong, Ji-Chai, Paldal-gu Suwon-city Kyungki-do (KR); Lee, Jae-Hoon, Paldal-gu Suwon-city Kyungki-do (KR); Oh, Yun-Je, Paldal-gu Suwon-city Kyungki-do (KR)
(74) Representative: Grünecker, Kinkeldey, Stockmair & Schwanhäusser Anwaltssozietät

(56) References cited:
- EP-A- 0 701 338
- EP-A- 1 271 814
- EP-A- 1 304 820

## Description

### BACKGROUND OF THE INVENTION

### 1. Field of the Invention

The present invention relates to a duobinary optical transmission apparatus using a duobinary optical transmission technique.

### 2. Description of the Related Art

In general, a conventional DWDM (Dense Wavelength Division Multiplexing) optical transmission system provides excellent communication efficiency because it can transmit an optical signal having multiple channels with different wavelengths through a single optical fiber. Such DWDM systems can transmit the optical signal regardless of transmission speed. For these reasons, the DWDM systems are widely used in ultra-high speed internet networks as the data traffic in such internet networks is increasing.

It is also noted that some conventional systems using DWDM technology can transmit more than a hundred channels through a single optical fiber. Research is also being actively conducted to develop a system which can transmit more than two hundred channels of 40 Gbps through a single optical fiber simultaneously which would result in a transmission speed of more than 10 Tbps.

However, the enlargement of transmission capacity is restricted due to severe interference and distortion between channels if the channel distance is less than 50GHz when a light intensity is modulated using a conventional non-retum-to-zero (NRZ) method, which is due to a rapid increase of data traffic and a request for high-speed transmission of data of more than 40 Gbps. Transmission distance is restricted in high-speed transmission of more than 10 Gbps since a direct current (DC) frequency component of a conventional binary NRZ transmission signal and a high frequency component spread during modulation cause non-linearity and dispersion when the binary NRZ transmission signal propagates in an optical fiber medium.

Developments in optical duobinary technology has been highlighted as an optical transmission technology capable of overcoming the transmission distance restriction due to chromatic dispersion. In this regard, duobinary transmission reduces the transmission spectrum as compared to the general binary transmission discussed above. In a dispersion restriction system, a transmission distance is in inverse proportion to the square of the transmission spectrum bandwidth. This means that, when the transmission spectrum is reduced by 1/2, the transmission distance increases four times. Since the carrier frequency is suppressed in a duobinary transmission spectrum, it is possible to relax the restriction of an optical power output caused by Brillouin scattering excited in the optical fiber.

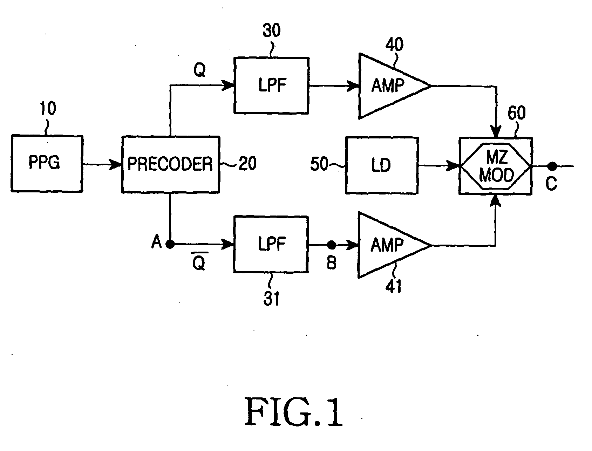

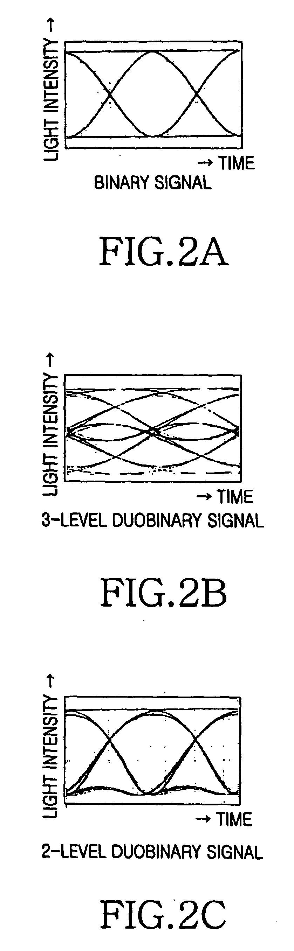

FIG. 1 illustrates an example of a structure of a conventional duobinary optical transmission apparatus, and FIGs. 2A to 2C are eye diagrams of an output signal at nodes A, B, and C in FIG. 1.

Referring to FIG. 1, the conventional duobinary optical transmission apparatus includes a pulse pattern generator (PPG) 10, a precoder 20, low pass filters 30 and 31, modulator driving amplifiers 40 and 41, a laser light source 50, and a Mach-Zehnder interference type light intensity modulator 60. The pulse pattern generator 10 generates a 2-level electrical pulse signal. The precoder 20 encodes the 2-level NRZ electrical signal. The low pass filters 30 and 31 change the 2-level NRZ electrical signals to 3-level electrical signals and reduce the bandwidth of the signals. The modulator driving amplifiers 40 and 41 amplify the 3-level electrical signals to output optical modulator driving signals. The laser light source 50 outputs a carrier.

As discussed above, the 2-level pulse signal generated in the pulse pattern generator 10 is encoded in the precoder 20, and FIG. 2 shows an eye diagram of the 2-level pulse signal at the node A. The 2-level binary signals output from the precoder 20 are input to the low pass filters 30 and 31. Each of the low pass filters 30 and 31 have a bandwidth corresponding to about 1/4 of the clock frequency of the 2-level binary signals. This excessive restriction to the bandwidth causes interference between codes, which thus changes the 2-level binary signal to a 3-level duobinary signal. An output eye diagram of the signal at node B is shown in FIG. 2B. The 3-level duobinary signals are amplified in the modulator driving amplifiers 40 and 41 and are then utilized as signals for driving the Mach-Zehnder interference type light intensity modulator 60. The phase and light intensity of the carrier output from the laser light source 50 are modulated by the driving signal of the Mach-Zehnder interference type light intensity modulator 60, so that the modulator 60 outputs a 2-level optical duobinary signal modulated from the carrier. FIG. 2C shows an eye diagram at node C. In FIG. 1, *Q̅* represents an inverter signal of *Q.* The signals *Q* and *Q̅* are input to positive and negative electrodes of the Mach-Zehnder interference type light intensity modulator 60 which has a dual electrode structure.

Mach-Zehnder interference type light intensity modulators as described above can he classified into two types having a Z-cut structure and an X-cut structure. In a Z-cut structured Mach-Zehnder interference type light intensity modulator has dual arms, each arm includes an electrical low pass filter 30 or 31 and a modulator driving amplifier 40 or 41, which enabling a 3-level electric signal to be applied to each arm. Although not shown, in an X-cut structured Mach-Zehnder interference type light intensity modulator has a single arm. The single arm includes an electrical low pass filter and a modulator driving amplifier, so that a 3-level electric signal can be applied to the single arm.

However, in the conventional duobinary optical transmission apparatuses as described above, the 3-level electric signal is generated by the low pass filter. Therefore, any difference in characteristics of output optical signals caused by lengths of a pseudo random bit sequence (PRBS) and the reliance of transmission quality on the filtering characteristic of the low pass filters may pose a critical problem in a system. In general, the slope of a signal that is converted from level 0 into level 1 is different from the slope of a signal that is converted from level 1 into level 0. In the case of a duobinary optical transmitter using the electrical low pass filter, transitions from level 0 to level 1 and from level 1 to level 0 occur in a state where parts of the signal having different slopes overlap. This causes the jitter of an output waveform to increase in the conventional structures of either the Z-cut type or the X-cut type Mach-Zehnder interference type light intensity modulators.

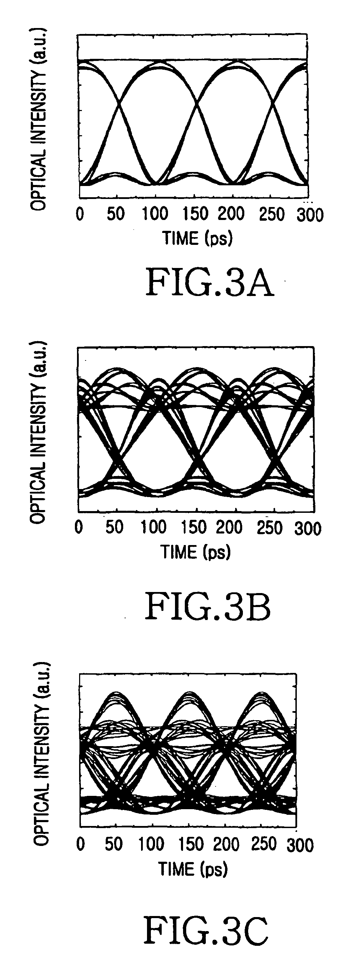

This reliance of the signal pattern imposes restrictions on real optical transmission. For example, FIGs. 3A to 3C show eye diagrams of optical signals transmitted through a single mode optical fiber by a conventional duobinary optical transmitter. The eye diagrams show relatively clean appearances when the transmission distance has a value between zero km (see FIG. 3A) and 160 km (see FIG. 3B), and show severely distorted appearances when the transmission distance exceeds 240 km. As the transmission distance increases, the dispersion characteristic of an optical fiber deteriorates. When the optical transmission apparatus includes a Bessel-Thomson type filter (which is relatively expensive) as the low pass filter, the entire optical transmission apparatus may lose price competitiveness.

Accordingly, there is a need in the art for improved duobinary optical transmission systems.

WO 02/005464 concerns an optical transmitter and an optical fiber transmission system having the same and discloses all features of the preamble of claim 1.

EP 0701338 discloses an optical intensity modulation transmission system which converts an input binary signal into a duobinary signal which is applied to an optical modulation means which provides optical intensity modulation signals.

EP 1271814 discloses a high precision chromatic dispersion measuring method and an automatic dispersion compensating optical system that uses this method. This disclosure shows two optical modulator stages whereby the first stage receives duobinary and inverted duobinary signals and the second stage receives clock signals and inverted clock signals.

### SUMMARY OF THE INVENTION

One aspect of the present invention is to solve the above-mentioned problems occurring in the prior art.

Another aspect of the present invention is to provide a duobinary optical transmission apparatus using a duobinary optical transmission technique, which is not affected by the transmission characteristic of pseudo random bit sequences (PRBS).

Another aspect of the present invention is to provide a duobinary optical transmission apparatus which has increased immunity against dispersion and non-linearity in high-speed long-distance wavelength division multiplexing (WDM) transmission of an optical signal, without using an electrical low-pass filter.

One embodiment of the present invention is directed to a duobinary optical transmission apparatus including a light source outputting an optical carrier; an NRZ optical signal generating section receiving an NRZ electrical signal, modulating the optical carrier into an NRZ optical signal according to the NRZ electrical signal, and outputting the NRZ optical signal; and a duobinary optical signal generating section receiving the NRZ electrical signal and modulating the NRZ optical signal into a duobinary optical signal.

Preferably, the NRZ optical signal generating section includes a pair of first modulator driving amplifiers amplifying and outputting the NRZ electrical signal; and a light intensity modulator modulating an intensity of the optical carrier according to driving signals inputted from the first modulator driving amplifiers.

More preferably, the duobinary optical signal generating section includes a precoder encoding the NRZ electrical signal inputted to the precoder; a pair of second modulator driving amplifiers amplifying and outputting the encoded signal; and a light phase modulator modulating a phase of the NRZ optical signal according to driving signals inputted from the second modulator driving amplifiers.

Another embodiment of the present invention is directed to a method for outputting a duobinary optical signal. The method includes the steps of outputting an optical carrier signal, receiving an NRZ electrical signal, modulating the optical carrier into an NRZ optical signal according to the NRZ electrical signal, and modulating, via a modulator, the NRZ optical signal into a duobinary optical signal by means of a precoded Non-Return to Zero electrical signal.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram showing the structure of a conventional duobinary optical transmission apparatus;
FIGs. 2A to 2C are eye diagrams of an output signal at nodes A, B, and C in FIG. 1;
FIGs. 3A to 3C are eye diagrams of optical signals transmitted through a single mode optical fiber by a conventional duobinary optical transmitter;
FIG. 4 is a block diagram showing a duobinary optical transmission apparatus according to an embodiment of the present invention;
FIGs. 5A and 5B are eye diagrams of output signals through nodes O and P of FIG. 4;
FIGs. 6A to 6C are eye diagrams of an optical signal transmitted through a single mode optical fiber by a duobinary optical transmission apparatus according one embodiment of the present invention; and
FIG. 7 is a graph showing comparison between receiver sensitivities with respect to transmission distance in a duobinary optical transmission apparatus according to aspects of present invention and a conventional duobinary optical transmission apparatus.

### DETAILED DESCRIPTION OF THE PREFERRED EMBODIMENT

Hereinafter, preferred embodiments of the present invention will be described with reference to the accompanying drawings. For the purposes of clarity and simplicity, a detailed description of known functions and configurations incorporated herein will be omitted as it may obscure the subject matter of the present invention.

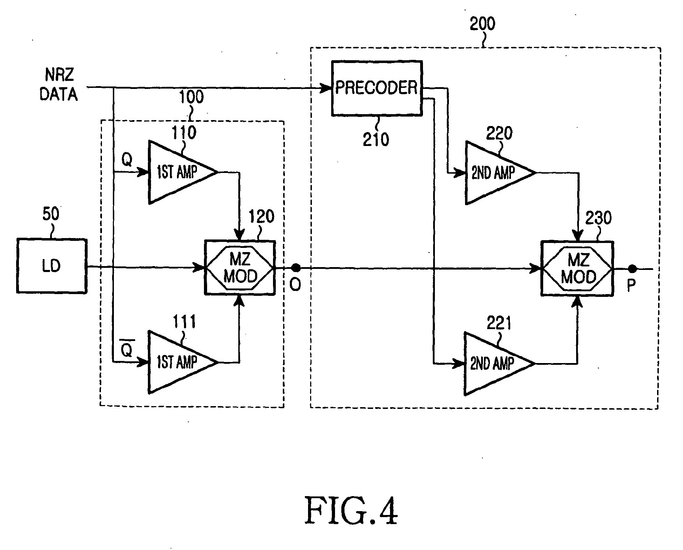

FIG. 4 is a block diagram showing a duobinary optical transmission apparatus according to an embodiment of the present invention. While Fig. 4 shows a dual armed Z-cut Mach-Zehnder interference type light intensity modulator 230, it should be understood that a duobinary optical transmission apparatus according to aspects of the present invention may employ a single armed X-cut Mach-Zehnder interference type light intensity modulator. Further, it should be appreciated by one of ordinary skill in the art that each Mach-Zehnder interference type light intensity modulator can modulate not only the intensity but also the phase of light, although the description of the present invention will be given based on that each section of the apparatus has a light intensity modulator or light phase modulator, for facilitating the understanding of the function of the modulator.

As shown in FIG. 4, the duobinary optical transmission apparatus includes a light source 50 that outputs an optical carrier; an NRZ optical signal generating section 100 that receives an NRZ electrical signal. The generating section 100 modulates the optical carrier into an NRZ optical signal according to the NRZ electrical signal and outputs the NRZ optical signal, and the apparatus also includes a duobinary optical signal generating section 200 that receives the precoded NRZ electrical signal and modulating the NRZ optical signal to form a duobinary optical signal.

The NRZ optical signal generating section 100 includes a pair of first modulator driving amplifiers 110 and 111 that amplify and output the NRZ electrical signal, and a Mach-Zehnder interference type light intensity modulator 120 that modulates the intensity of the optical carrier according to driving signals input from the first modulator driving amplifiers 110 and 111.

The duobinary optical signal generating section 200 includes a precoder 210 that encodes the input NRZ electrical signal, a pair of second modulator driving amplifiers 220 and 221 that amplify and output the encoded signal, and a Mach-Zehnder interference type light phase modulator 230 that modulates the phase of the NRZ optical signal according to driving signals input from the second modulator driving amplifiers 220 and 221.

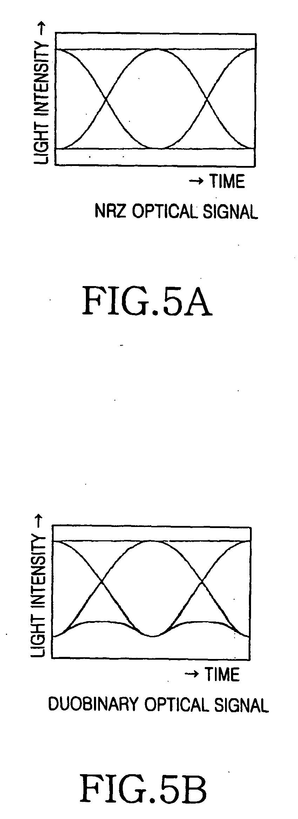

In operation, referring again to FIG. 4, an NRZ electrical signal generated in a pulse pattern generator (PPG) (not shown) is amplified by the first modulator driving amplifiers 110 and 111 and output as driving signals for the modulator 120. According to the modulator driving signals input to modulation terminals RF of the light intensity modulator 120, the light intensity modulator 120 modulates the light intensity of the carrier output from the laser light source 50 and outputs the modulated signal to node O. FIG. 5A is an eye diagram at node O of FIG. 4, and shows that a general NRZ optical signal is generated by and output from the light intensity modulator 120. This NRZ optical signal is input to the Mach-Zehnder interference type light phase modulator 230 in the duobinary optical signal generating section 200.

The NRZ electrical signal generated by the pulse pattern generator is also encoded by the precoder 210 in the duobinary optical signal generating section 200, which enables duobinary transmission without any change in a receiver. The encoded binary signal is amplified by the second modulator driving amplifiers 220 and 221 and is input to modulation terminals RF of the Mach-Zehnder interference type light phase modulator 230. According to the modulator driving signals, the Mach-Zehnder interference type light phase modulator 230 modulates the phase of the NRZ optical signal inputted from the light intensity modulator 120 in the NRZ optical signal generating section 100 and outputs the modulated signal to node P. In this regard, at each bit of the signal at node '0', the light phase modulator 230 shifts the phase of the optical signal from 0 to π or from π to 0. Therefore, bits of '1' located at both sides of each bit of '0' have different phases from each other. FIG. 5B is an eye diagram at node P of FIG. 4, and shows that a duobinary optical signal is generated from the light phase modulator 230.

This allows a duobinary optical signal to be generated without using an electrical low pass filter, and signal distortion during the conversion of the 2-level electrical signal to the 3-level electrical signal can be minimized. In addition, a duobinary optical signal generated according to aspects of the present invention has immunity against dispersion of an optical fiber, which is determined by extinction ratio and chirp of the NRZ signal generated in the light intensity modulator in the NRZ optical signal generating section 100. Therefore, optimum extinction ratio and chirp are determined in consideration of characteristics of the light intensity modulator.

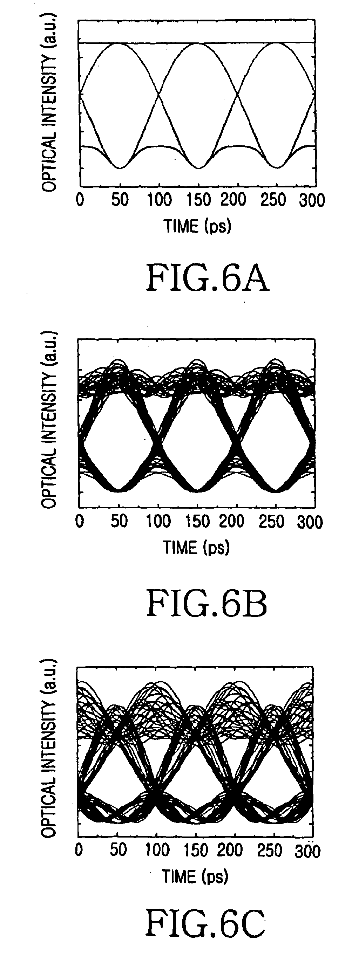

FIGS. 6A to 6C are eye diagrams of an optical signal transmitted through a single mode optical fiber by a duobinary optical transmission apparatus according to embodiments of the present invention. In comparison with FIGs. 3A to 3C, these eye diagrams have a cleanly open appearances not only when the signal has been transmitted zero km (see FIG. 6A) or 160 km (see FIG. 6B) but also after 240 km (see FIG. 6C), which implies that the duobinary optical transmission apparatus according to aspects of the present invention has larger immunity against dispersion of an optical fiber than the conventional duobinary optical transmission apparatus discussed above.

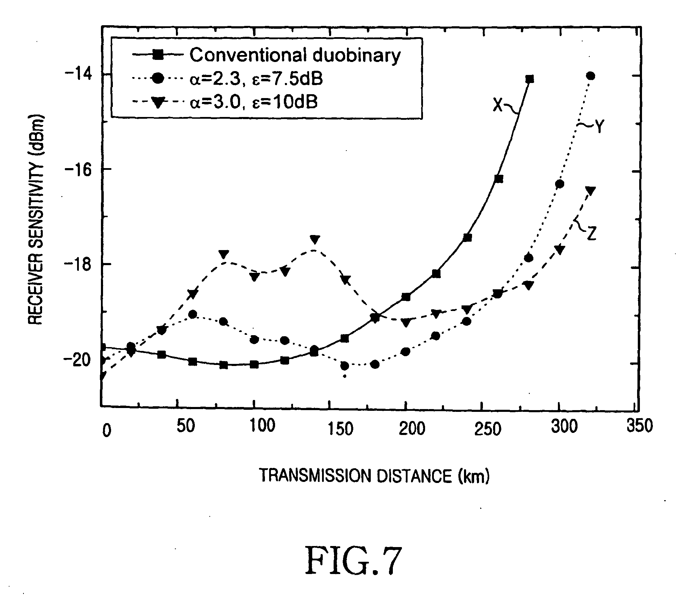

FIG. 7 is a graph showing a comparison between receiver sensitivities with respect to optical fiber lengths (that is, transmission distance) in the duobinary optical transmission apparatus according to embodiments of the present invention and the conventional duobinary optical transmission apparatus discussed above. In FIG. 7, curve X represents the receiver sensitivity of the conventional duobinary optical transmission apparatus, and curves Y and Z represent the receiver sensitivities of the duobinary optical transmission apparatus according to embodiments of the present invention. The extinction ratio is 7.5 dB and the chirp variable is +2.3 in curve Y and the extinction ratio is 10 dB and the chirp variable is +3.0 in curve Z. As apparent from the above description, since the duobinary optical transmission apparatus according to embodiments of the present invention has a larger immunity against dispersion of an optical fiber, a lower receiver sensitivity is required after transmission of the optical signal in the duobinary optical transmission apparatus according to embodiments of the present invention than in the conventional duobinary optical transmission apparatus. Further, in the duobinary optical transmission apparatus according to embodiments of the present invention, the immunity against dispersion of an optical fiber can be changed by adjusting the extinction ratio and chirp variable of the modulator.

As described above, the duobinary optical transmission apparatuses according to the present invention can generate a duobinary optical signal without using an electrical low pass filter. Therefore, the duobinary optical transmission apparatuses according to the present invention can reduce the influence on transmission characteristics by signal patterns and improve receiver sensitivity before transmission. Further, the apparatuses of the present invention have increased immunity against dispersion of an optical fiber, thereby requiring reduced receiver sensitivity even after transmission of the optical signal. Therefore, the duobinary optical transmission apparatuses according to the present invention can increase the transmission distance of an optical signal by about two times and has improved price competitiveness, in comparison with the conventional apparatuses.

While the invention has been shown and described with reference to certain preferred embodiments thereof, it will be understood by those skilled in the art that various changes in form and details may be made therein without departing from scope of the invention as defined by the appended claims.

## Claims

1. A duobinary optical transmission apparatus comprising:
a light source (50) arranged to output an optical carrier;
a Non-Return to Zero optical signal generator (100) arranged to receive a Non-Return to zero binary electrical signal, to modulate the optical carrier into a Non-Return to Zero optical signal according to the Non-Return to Zero binary electrical signal, and to output the Non-Return to Zero optical signal;
**characterized by**
a duobinary optical signal generator (200) arranged to receive the Non-Return to Zero binary electrical signal and to modulate the Non-Return to Zero optical signal into a duobinary optical signal by inputting an encoded version of said Non-Return to Zero binary electrical signal into a light phase modulator (230).

2. The duobinary optical transmission apparatus as claimed in claim 1, wherein the Non-Return to Zero optical signal generator (100) includes:
a plurality of first modulator driving amplifiers (110, 111) that amplify and output the Non-Return to Zero electrical signal; and/or
a light intensity modulator (120) that modulates an intensity of the optical carrier according to driving signals input from the first modulator driving amplifiers (110, 111).

3. The duobinary optical transmission apparatus as claimed in claim 1 or 2, wherein the duobinary optical signal generator (200) includes:
a precoder (210) arranged to encode the Non-Return to Zero binary electrical signal;
a plurality of second modulator driving amplifiers (220, 221) that amplify and output the encoded signal; and/or
a light phase modulator (230) that modulates a phase of the Non-Return to Zero optical signal according to driving signals input from the second modulator driving amplifiers (220, 221).

4. The duobinary optical transmission apparatus as claimed in claim 2 or 3, wherein the light intensity modulator (120) is a Mach-Zehnder interference type modulator.

5. A duobinary optical transmission apparatus as claimed in claim 4, wherein the Mach-Zehnder interference type modulator is a dual armed Z-cut Mach-Zehnder interference type light intensity modulator (120).

6. The duobinary optical transmission apparatus as claimed in claim 4, wherein the Mach-Zehnder interference type modulator is a single armed X-cut type Mach-Zehnder interference type light intensity modulators (120).

7. The duobinary optical transmission apparatus as claimed in one of the claims 3 to 6, wherein the light phase modulator (230) is a Mach-Zehnder interference type modulator.

8. The duobinary optical transmission apparatus as claimed in claim 7, wherein the Mach-Zehnder interference type modulator is a dual armed Z-cut Mach-Zehnder interference type light phase modulator (230).

9. The duobinary optical transmission apparatus as claimed in claim 7, wherein the Mach-Zehnder interference type modulator is a single armed X-cut type Mach-Zehnder interference type light phase modulators (230).

10. The duobinary optical transmission apparatus as claimed in one of the claims 1 to 9, wherein the Non-Return to Zero electrical signal is generated by a pulse pattern generator.

11. A method for outputting a duobinary optical signal, comprising the steps of:
outputting an optical carrier signal;
receiving a Non-Return to Zero binary electrical signal;
modulating the optical carrier into a Non-Return to Zero optical signal according to the Non-Return to Zero binary electrical signal, and to output the Non-Return to Zero optical signal; and
modulating, via a modulator, the Non-Return to Zero optical signal into a duobinary optical signal by means of an encoded version of said Non-Return to Zero binary electrical signal.

12. The method as claimed in claim 11, further comprising the step of outputting the duobinary optical signal to an optical fiber.

13. The method as claimed in claim 12, further comprising the step of changing a dispersion factor of the optical fiber by adjusting an extinction ratio and a chirp variable of the modulator.

## Patentansprüche

1. Duobinäre optische Übertragungsvorrichtung, die folgendes umfasst:
eine Lichtquelle (50), die so angeordnet ist, dass sie ein optisches Trägersignal ausgibt;
ein optischer Keine-Rückkehr-Zu-Null Signalgenerator (100), der so angeordnet ist, dass er ein binäres elektrisches Keine-Rückkehr-Zu-Null Signal empfängt, dass er das optische Trägersignal zu einem optischen Keine-Rückkehr-Zu-Null Signal entsprechend dem binären elektrischen Keine-Rückkehr-Zu-Null Signal moduliert, und dass er das optische Keine-Rückkehr-Zu-Null Signal ausgibt;
**gekennzeichnet durch**
einen duobinären optischen Signalgenerator (200), der so angeordnet ist, dass er das binäre elektrische Keine-Rückkehr-Zu-Null Signal empfängt und das optische Keine-Rückkehr-Zu-Null Signal in ein duobinäres optisches Signal moduliert, indem eine codierte Version des binären elektrischen Keine-Rückkehr-Zu-Null Signals in einen Lichtphasenmodulator (230) eingegeben wird.

2. Duobinäre optische Übertragungsvorrichtung nach Anspruch 1, worin der optische Keine-Rückkehr-Zu-Null Signalgenerator (100) folgendes einschließt:
eine Vielzahl von ersten Modulator-Ansteuerverstärkern (110, 111), die das elektrische Keine-Rückkehr-Zu-Null Signal verstärken und ausgeben; und/oder
einen Lichtintensitätsmodulator (120), der eine Intensität des optischen Trägersignals entsprechend eines Ansteuersignals, das von dem ersten Modulator-Ansteuerverstärker (110, 111) eingegeben wird, moduliert.

3. Duobinäre optische Übertragungsvorrichtung nach Anspruch 1 oder 2, worin der duobinäre optische Signalgenerator (200) folgendes einschließt:
einen Vorcodierer (210), der so angeordnet ist, dass er das binäre elektrische Keine-Rückkehr-Zu-Null Signal codiert;
eine Vielzahl von zweiten Modulator-Ansteuerverstärkern (220, 221), die das codierte Signal verstärken und ausgeben; und/oder
einen Lichtphasenmodulator (230), der eine Phase des optischen Keine-Rückkehr-Zu-Null Signals entsprechend den Ansteuersignalen, die von den zweiten Modulator-Ansteuerverstärkern (220, 221) eingegeben werden, moduliert.

4. Duobinäre optische Übertragungsvorrichtung nach Anspruch 2 oder 3, worin der Lichtintensitätsmodulator (120) ein Modulator vom Mach-Zehnder-Interferenz-Typ ist.

5. Duobinäre optische Übertragungsvorrichtung nach Anspruch 4, worin der Modulator vom Mach-Zehnder-Interferenz-Typ ein zweiarmiger Z-Schnitt-Lichtintensitätsmodulator (120) vom Mach-Zehnder-Interferenz-Typ ist.

6. Duobinäre optische Übertragungsvorrichtung nach Anspruch 4, worin der Modulator vom Mach-Zehnder-Interferenz-Typ ein einarmigen X-Schnitt-Lichtintensitätsmodulator (120) vom Mach-Zehnder-Interferenz-Typ ist.

7. Duobinäre optische Übertragungsvorrichtung nach einem der Ansprüche 3 bis 6, worin der Lichtphasenmodulator (230) ein Modulator vom Mach-Zehnder-Interferenz-Typ ist.

8. Duobinäre optische Übertragungsvorrichtung nach Anspruch 7, worin der Modulator vom Mach-Zehnder-Interferenz-Typ ein zweiarmiger Z-Schnitt-Lichtphasenmodulator (230) vom Mach-Zehnder-Interferenz-Typ ist.

9. Duobinäre optische Übertragungsvorrichtung nach Anspruch 7, worin der Modulator vom Mach-Zehnder-Interferenz-Typ ein einarmigen X-Schnitt-Lichtphasenmodulator (230) vom Mach-Zehnder-Interferenz-Typ ist.

10. Duobinäre optische Übertragungsvorrichtung nach einem der Ansprüche 1 bis 9, worin das elektrische Keine-Rückkehr-Zu-Null Signal durch einen Pulsmustergenerator erzeugt wird.

11. Verfahren zur Ausgabe eines duobinären optischen Signals, das folgende Schritte umfasst:
Ausgabe eines optischen Trägersignals;
Empfangen eines binären elektrischen Keine-Rückkehr-Zu-Null Signals;
Modulieren des optischen Trägers zu einem optischen Keine-Rückkehr-Zu-Null Signal entsprechend des binären elektrischen Keine-Rückkehr-Zu-Null Signals und Ausgeben des optischen Keine-Rückkehr-Zu-Null Signals; und
Modulieren durch einen Modulator des optischen Keine-Rückkehr-Zu-Null Signals zu einem duobinären optischen Signal durch eine codierte Version des binären elektrischen Keine-Rückkehr-Zu-Null Signals.

12. Verfahren nach Anspruch 11, das weiterhin den Schritt des Ausgebens des duobinären optischen Signals an eine optische Faser umfasst.

13. Verfahren nach Anspruch 12, das weiterhin den Schritt des Ändems eines Dispersionsfaktors der optischen Faser umfasst, indem ein Auslöschverhältnis und eine Chirp-Variable des Modulators eingestellt wird.

## Revendications

1. Appareil de transmission optique duobinaire comprenant :
une source lumineuse (50) agencée pour fournir en sortie une porteuse optique ;
un générateur de signal optique sans retour à zéro (100), agencé pour recevoir un signal électrique binaire sans retour à zéro, pour moduler la porteuse optique en un signal optique sans retour à zéro en fonction du signal électrique binaire sans retour à zéro et pour fournir en sortie le signal optique sans retour à zéro ;
**caractérisé par**
un générateur de signal optique duobinaire (200) agencé pour recevoir le signal électrique binaire sans retour à zéro et pour moduler le signal optique sans retour à zéro en un signal optique duobinaire en injectant une version codée dudit signal électrique binaire sans retour à zéro dans un modulateur de phase lumineuse (230).

2. Appareil de transmission optique duobinaire selon la revendication 1, dans lequel le générateur de signal optique sans retour à zéro (100) comprend :
une pluralité de premiers amplificateurs d'attaque de modulateur (110, 111) qui amplifient et fournissent en sortie le signal électrique sans retour à zéro ; et/ou
un modulateur d'intensité lumineuse (120) qui module une intensité de la porteuse optique en fonction de signaux d'attaque fournis en entrée par les premiers amplificateurs d'attaque de modulateur (110, 111).

3. Appareil de transmission optique duobinaire selon la revendication 1 ou 2, dans lequel le générateur de signal optique duobinaire (200) comprend :
un précodeur (210) agencé pour coder le signal électrique binaire sans retour à zéro ;
une pluralité de seconds amplificateurs d'attaque de modulateur (220, 221) qui amplifient et fournissent en sortie le signal codé ; et/ou
un modulateur de phase lumineuse (230) qui module une phase du signal optique sans retour à zéro en fonction de signaux d'attaque fournis en entrée par les seconds amplificateurs d'attaque de modulateur (220, 221).

4. Appareil de transmission optique duobinaire selon la revendication 2 ou 3, dans lequel le modulateur d'intensité lumineuse (120) est un modulateur de type interféromètre de Mach-Zehnder.

5. Appareil de transmission optique duobinaire selon la revendication 4, dans lequel le modulateur de type interféromètre de Mach-Zehnder est un modulateur d'intensité lumineuse (120) de type interféromètre de Mach-Zehnder à deux bras et à coupe Z.

6. Appareil de transmission optique duobinaire selon la revendication 4, dans lequel le modulateur de type interféromètre de Mach-Zehnder est un modulateur d'intensité lumineuse (120) de type interféromètre de Mach-Zehnder à bras unique et à coupe X.

7. Appareil de transmission optique duobinaire selon l'une des revendications 3 à 6, dans lequel le modulateur de phase lumineuse (230) est un modulateur de type interféromètre de Mach-Zehnder.

8. Appareil de transmission optique duobinaire selon la revendication 7, dans lequel le modulateur de type interféromètre de Mach-Zehnder est un modulateur de phase lumineuse (230) de type interféromètre de Mach-Zehnder à deux bras et à coupe Z.

9. Appareil de transmission optique duobinaire selon la revendication 7, dans lequel le modulateur de type interféromètre de Mach-Zehnder est un modulateur de phase lumineuse (230) de type interféromètre de Mach-Zehnder à bras unique et à coupe X.

10. Appareil de transmission optique duobinaire selon l'une des revendications 1 à 9, dans lequel le signal électrique sans retour à zéro est produit par un générateur d'impulsions.

11. Procédé de production d'un signal optique duobinaire, comprenant les étapes consistant à :
produire un signal de porteuse optique ;
recevoir un signal électrique binaire sans retour à zéro ;
moduler la porteuse optique en un signal optique sans retour à zéro en fonction du signal électrique binaire sans retour à zéro et fournir en sortie le signal optique sans retour à zéro ; et
moduler, à l'aide d'un modulateur, le signal optique sans retour à zéro en un signal optique duobinaire à l'aide d'une version codée dudit signal électrique binaire sans retour à zéro.

12. Procédé selon la revendication 11, comprenant en outre l'étape consistant à fournir en sortie le signal optique duobinaire à une fibre optique.

13. Procédé selon la revendication 12, comprenant en outre l'étape consistant à modifier le facteur de dispersion de la fibre optique en ajustant un rapport d'extinction et un gazouillis (chirp) variable du modulateur.
